Europäisches Patentamt

**European Patent Office**

**Office européen des brevets**

(11) Publication number: **0 115 908**
A2

# EUROPEAN PATENT APPLICATION

(21) Application number: **84300066.2**

(22) Date of filing: **05.01.84**

(51) Int. Cl.³: **G 01 L 7/08**

(30) Priority: **10.01.83 US 457018**

(43) Date of publication of application: **15.08.84**
**Bulletin 84/33**

(84) Designated Contracting States: **DE FR GB IT SE**

(71) Applicant: **AUTOMOTIVE ENGINE ASSOCIATES,**
**301 South Blount Street, Madison Wisconsin 53703 (US)**

(72) Inventor: **Showalter, Merle Robert, 301 South Blount**
**Street, Madison Wisconsin 53703 (US)**

(74) Representative: **Brooke-Smith, Fred et al, STEVENS,**
**HEWLETT & PERKINS 5 Quality Court Chancery Lane,**
**London WC2A 1HZ (GB)**

(54) **Transducer.**

(57) A thin flat plate adhesively bonded at an elevated temperature to much stiffer support blocks having circular cutaway sections whereby a section of said plate is an unsupported diaphragm which deflects in proportion to diaphragm pressure differentials. The support blocks have slightly lower coefficients of expansion than the thin plate. At temperatures below the bonding temperature, the diaphragm is always in a mild state of uniform biaxial tension, and the interaction between plate, adhesive bond and supporting blocks makes for a very mechanically reproducable diaphragm deflection characteristic useful for electric pressure differential transducers.

ACTORUM AG

0115908

TRANSDUCER                                    FBS/3264

BACKGROUND AND OBJECTS

Pressure measurement is an old art; the need for accurate and high frequency response pressure transducers, particularly those generating electrical signals, has been great for a long time, and such devices have been available for a long time. In particular, diaphragm pressure transducers where the motion of the diaphragm is measured in various ways are old. However, pressure transducers have typically been relatively expensive laboratory devices. The need for accurate pressure measurements in mass production products, particularly fuel/air metering equipment for automobile engines, has generated a large incentive to produce pressure transducers which are inexpensive, rugged, and drift-free over the wide range of temperatures and vibration conditions characteristic of automotive engine operation. Pressure transducer costs are now a significant part of fuel/air metering system costs. It is the purpose of the present invention to produce a diaphragm-type differential pressure tranducer which is inexpensive, drift-free and rugged under automotive conditions.

As the electrical arts have advanced, the expense and difficulty of accurately measuring a diaphragm position with a capacitance sensor, using several resonance techniques (some with excellent electrical noise filtration) has become straightforward and inexpensive. The electrical means of sensing diaphragm displacement are not part of this application, and a number of electrical means to sense diaphragm position are applicable.

It has been found to be difficult to produce a diaphragm pressure transducer using conventional metal parts which is drift-free and adequately independent of temperature. The problem is essentially one of diaphragm

1

mounting at the diaphragm boundaries. Although the deflection equations for a flat diaphragm are known, the actual deflections are quite sensitive to clamping conditions. It is usually difficult to know the exact effective diameter of the diaphragm to use for the equations. Moreover, since the deflections of the diaphragm near the clamping point are very small, very small geometric changes in the clamping geometry can produce variations in pressure transducer behavior. Particularly, differential expansion between diaphragm and diaphragm mounting is a significant source of trouble, both because the clamping of the diaphragm may slip, and because the diaphragm (if it is in compression relative to its clamps) may buckle significantly at no pressure differential, producing a false reading. Thus, it is highly desirable that the diaphragm plate be in a state of mild uniform tension under all conditions where the pressure transducer is to yield a true reading.

The mechanical diaphragm assembly of the present invention achieves continuous uniform tension on the diaphragm and completely stable diaphragm clamping boundaries as follows.

IN THE DRAWINGS

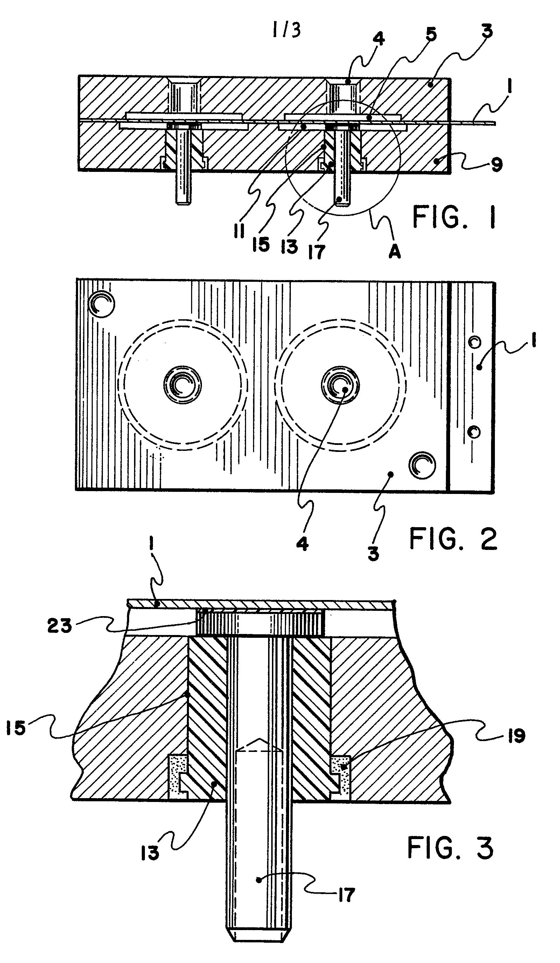

Figure 1 shows a cross section view of a diaphragm assembly embodying two diaphragms. The diaphragms are the unsupported circular parts of a single rectangular plate clamped and bonded elastomerically between two larger and much stiffer blocks 3 and 9. Plate 1 has a slightly larger coefficient of expansion than blocks 3 and 9, which have matched coefficients of expansion. Block 3, plate 1 and block 9 are assembled with an elastomeric bond which is set up at a temperature higher than the maximum temperature at which the diaphragm is expected to operate. Below the bonding temperature, the diaphragms will always be in a state of uniform biaxial tension.

Figure 2 is an overview on plate 3 of the assembly shown in Figure 1.

Figure 3 is an enlarged view corresponding to dashed circle A of Figure 1 showing the manner in which the capacitance pick-up is aligned and set with a bonding agent to produce a set mechanical zero.

Figure 4 is an enlargement (ten times scale) showing the edge clamping between plate 1 and blocks 3 and 9.

Figure 5 is analogous to Figure 1 and shows a pressure transducer with holes to accommodate two capacitance pickups per diaphragm, for use in a differential capacitance pickup arrangement.

Figure 6 is a view on Figure 5 analogous to Figure 2's view on Figure 1.

Figure 7 illustrates the plate bonding method of diaphragm mounting applied to a capacitance microphone.

DETAILED DISCUSSION

An understanding of the present diaphragm mounting invention requires: a.) an understanding of the basic deflection equation for flat circular diaphragms and a sense for its sensitivity; and b.) an understanding of the stiffness of elastomeric or adhesive bonds between flat surfaces in compression.

The formula for deflection of a flat plate is presented in useful form on page 384 in Measurement Systems by Ernest O. Doblin (McGraw-Hill Book Company, copyright 1975). To quote: "Flat diaphragms are widely used in electrical transducers either by sensing the center deflection with some displacement transducer or by bonding strain gauges to the diaphragm surface. The full scale deflection at the center must be less than about one-third of diaphgram thickness if non-linearity of less than 5 percent is desired. The pressure deflection formula for a flat diaphragm with edges clamped is:

$$p = \frac{16Et^4}{3R^4(1 - \mu^2)} \left[ \frac{Y_c}{t} + 0.488 \left( \frac{Y_c}{t} \right)^3 \right] \quad (6.46)$$

where $p \triangleq$ pressure difference across diaphgragm
$E \triangleq$ modulus of elasticity
$t \triangleq$ diaphragm thickness
$\mu \triangleq$ Poisson's ratio
$R \triangleq$ diaphragm radius
$Y_c \triangleq$ center deflection

For small deflections $\left( \dfrac{Y_c}{t} \right)^3$, is negligible compared with $\dfrac{Y_c}{t}$ and linear behavior may be expected since bending stresses predominate. At larger deflections, a stretching action is added to the bending, stiffening the diaphragm and contributing the $\left( \dfrac{Y_c}{t} \right)^3$ term."

It should be noted that the effective stiffness of the diaphragm for small deflections varies as the third power of thickness, and as the fourth power of diaphragm radius R. Also, a small degree of thermal compression in the plane of the diaphragm can produce a substantial buckling offset, so that the diaphragm must be in a small degree of tension to be reliable as a transducer. The radius defined in the diaphragm equation is also problematic in practice. Perfectly clamped sharp edges are not practically available, and the degree of sharpness required is extreme, since diaphragm deflections at the clamp are a matter of a few microinches. For this reason, the effective radius of the diaphragm can vary due to thermal cycling in unpredictable and unsatisfactory ways. To produce a diaphragm in practice which fits the deflection equations requires that the diaphragm always be in mild tension in directions parallel to the diaphragm plane, and that the effective radius of clamping be invariant from time to time and condition to condition.

4

These conditions can be achieved with the mechanical assembly shown in Figures 1, 2, 3 and 4. See Figure 1. A flat plate of uniform thickness 1 is clamped between two flat blocks 3 and 9, and adhesively bonded into a sandwich assembly. The coefficient of expansion of plate 1 is of the order of one percent larger than the coefficient of expansion of blocks 3 and 9, which are matched. The sandwich assembly is put together with an adhesive which sets at a slightly elevated temperature (275°F) and is assembled as follows.

Adhesive is placed in the thinnest convenient layer on the mating surfaces of sandwich end blocks 3 and 9. The sandwich end blocks 3 and 9 clamp flat plate 1 and are in turn clamped in compression during assembly, so that the adhesive layers between block 3 and plate 1 and block 9 and plate 1 are squeezed into very thin, uniform and relatively bubble-free layers. The adhesive cures and becomes rigid at its bonding temperature, which is set to be above the temperature at which the diaphragm assembly is required to produce accurate pressure differential readings. As assembly 3, 1, 9 cools, plate 1 will contract about 1 percent faster than plates 3 and 9. The plate will be constrained by the shear strength of the elastomer bonding plate 1 to blocks 3 and 9. In the operating temperature range, plate 1 will be in a uniform biaxial tension which will range between values of a few tenths of a psi at slightly elevated temperatures and a few hundredths of a psi at very low temperature. This degree of diaphragm tension has negligible effect on the bending stiffness of the diaphragm assembly for small deflections and therefore does not affect the pressure sensitivity of a diaphragm assembly used at small deflections. The assembly shown in Figures 1 and 2 produces two circular diaphragms formed from a single plate. If the diaphragm assembly is designed for deflections which produce only small tension effects (this is easy to do with a capacitance pickup), it is convenient to have the diaphragm

5

areas integral with plate 1, restrained and "clamped" by the restrained areas of plate 1, which restrained areas are adhesively bonded and supported in connection to blocks 3 and 9. The unsupported circular parts of plate 1, which function as diaphragms, are mechanically connected to blocks 3 and 9 in a manner which is unlikely to slip. This produces tension in the diaphragm at all times, and supports the diaphragm in a fashion allowing more exact applications of the diaphragm deflection equations.

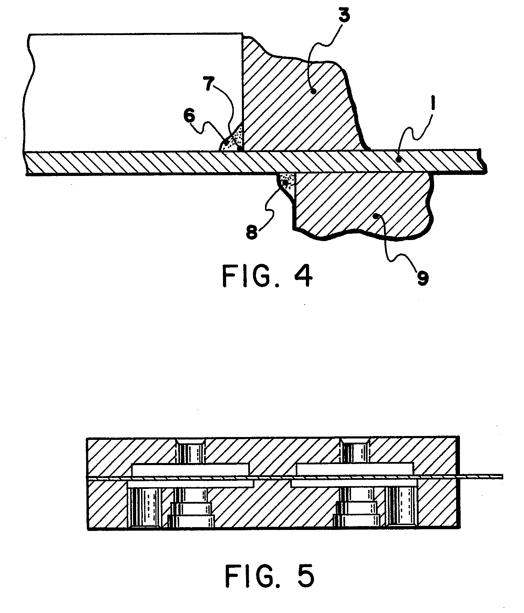

In Figure 1, plate 1 is adhesively bonded to block 3. An unsupported circular cavity 5, with a sharp edge 7, forms the unsupported circular diaphragm. This is used for pressure differentials where the high pressure is in cavity 11 in block 9, and the low pressure is always in cavity 5 in block 3. An enlarged view of the clamping at edge 7 is shown in Figure 4. In the bonding process, the elastomer between block 3 and plate 1 is squeezed to a very thin layer, and some excess elastomer bonding agent is squeezed out in collection glob 6. Pressure differentials always deform the plate upwards, so as to put edge 7 in compression.

It is not commonly understood how extremely stiff thin elastomer or adhesive bonds are in compression. Even if the bonding material is of very low Young's Modulus (i.e. silicon rubber) it has a high bulk modulus of compressibility. It is extremely difficult to squeeze out much volume in between parallel plates in compression with a thin bond. The stiffness of the bond in compression rapidly approaches the value predicted by the bulk modulus of the material. The effect is that an elastomer bond between two parallel plates can make them very stiff in compression, since the bond fills in the non-uniformities of the non-ideal surfaces, which otherwise permit significant compressive deflections. Thus, the elastomer bond between plate 1 and block 3 produces an effectively infinite stiff edge clamp at edge 7 if glob 6 does not exist. Glob 6 does exist. However, glob 6 is of a material with low Young's Modulus and is restraining the diaphragm at a place where displacements are quite small. The deflection properties of the diaphragms in the assembly shown very closely approximate those of the ideal equations. The mechanical properties are quite insensitive to normal values of vibration or temperature (particularly if heat flows through the assembly are small enough that internal conduction effects make the assembly substantially isothermal). The assembly is inexpensive and easy to manufacture.

It has now been shown how to mount a metal diaphragm elastomerically so that it closely approximates the governing deflection equations over a practical range of temperature variation. However, even if the diaphragm performance is ideal and linear it is still important to accurately mechanically connect the diaphragm to a rigidly mounted capacitance pickup in an inexpensive production process. Figure 3 shows an enlargement of dashed circle A in Figure 1 to show how this is arranged. An accurately machined nail-like capacitance pickup and lead piece 17 (preferably of an aluminum similar to that of blocks 3 and 9) mounts inside a dielectric plastic piece 13. At the top surface of pickup 17 is a plastic spacer layer 23 (which may be mylar) of an exact thickness. Assembly 13, 17 is pressed into receiver 15 until it comes up against plate 1, so that the distance between capacitance pickup 17 and plate 1 is determined by the plastic spacer 23. Dielectric piece 13 is set mechanically into connection with block 9 by an elastomer bonding agent in cavity 19. (It is intended that assembly 17, 13 be mounted in block 9 and precisely adjusted with respect to plate 1 by the bonding process where plate 1 is adhesively bonded to plates 3 and 9. The bonding agent in cavity 19 will bond plastic piece 13 to the surface of circular hole 15 along its axial length.) Before the bonding agent sets, viscous flow sets spacer 23 exactly against plate 1 at a neutral state of stress. The zero relationship between plate 1 and the capacitance pickup surface of piece 17 will be established. It should be noted that the elastomeric mounting technique positively aligns the axial relation between the capacitance pickup plate and the diaphragm plate in the process of assembly and then locks the adjustment in as the bonding agent sets. This technique of aligning the capacitance pickup with respect to the diaphragm is expected to be inexpensive and reliable under mass production and automotive use conditions.

The diaphragm assembly shown in Figures 1, 2, 3 and 4 will be characterized by linearity, an exactly reproducible characteristic of the diaphragm, and a positive alignment of the capacitance pickup with respect to the diaphragm. The calibration of the unit as a pressure transducer will depend upon the thickness of plastic separating film 23, upon the exact diameter of the cavity 5 in block 3, and on the thickness and mechanical properties of plate 1. Although it is practical to hold all these values to relatively tight tolerances, there is a tradeoff between tight tolerances and cost. Since the device is linear and characterized by a drift-free mechanical zero, these variations can be compensated for inexpensively with an electrical trim. It is also straightforward to build the capacitance pickup sensing electronics so that it is temperature insensitive. The mechanical assembly shown in Figures 1, 2, 3 and 4 in combination with such an electrical pickup, will form a rugged and inexpensive differential pressure transducer package. Those skilled in the art will recognize that the motion of the diaphragm may be sensed by some other means than capacitance, although capacitance is convenient and old in the art.

For some noise supression electrical circuits it is convenient to have a comparison between two like capacitance pickups to produce noise cancelling.

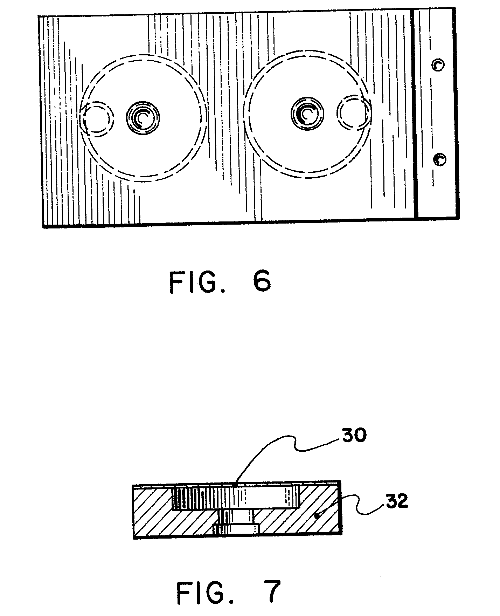

Figures 5 and 6 are analogous respectively to Figures 1 and 2, except that Figures 5 and 6 show a mechanical arrangement having accommodation for two capacitance pickups per diaphragm, for use in such an electrical filtering technique.

The technique of bonding a relatively large plate to produce a diaphragm with good mechanical properties can be applicable to pressure transducers sensitive to very small pressure differentials (i.e. microphones). For example, Figure 7 shows how plate 30 can be elastomerically mounted to flat mounting 32 to produce a diaphragm which can be part of a sensitive and mechanically robust capacitance microphone. The excellent mechanical properties of the diaphragm mounting should make such a diaphragm mounting useful for a high fidelity microphone.

I CLAIM

Claim 1:

A diaphragm type pressure transducer comprising a flat metal plate having an upper and a lower surface, a top metal support block having a flat surface for mating to a flat surface of said flat plate and having a circular hole in said support block flat surface

a bottom support block having a flat surface for mating to said flat plate and having a circular hole corresponding to the circular hole in said top plate,

wherein said flat plate is sandwiched between the flat mating surfaces of said top and bottom support blocks and said mating surfaces are bonded adhesively to form a sandwich structure

where the section of said flat plate which corresponds to the circular holes in the top and bottom support blocks forms an unsupported clamped diaphragm which deflects according to the mathematical equations of a clamped flat plate diaphragm.

Claim 2:

The invention as stated in Claim 1 and wherein the bonding of said flat plate to said top and bottom support blocks is accomplished so that the adhesive between the bonded surfaces is squeezed out into a very thin relatively void free layer, so that the clamping conditions of the diaphragm conform closely to the required infinitely stiff clamping conditions.

0115908

Claim 3:

The invention as stated in Claim 1 wherein said flat diaphragm plate has a coefficient of expansion slightly higher than the coefficient of expansion of said support blocks, where said adhesive bonding of said surface occurs at a temperature above the design range of operating temperatures of the transducer, whereby the said unsupported clamped diaphragm is maintained in slight biaxial tension when the transducer assembly operates within said design range of operating temperatures.

0115908

1/3

FIG. 1

FIG. 2

FIG. 3

FIG. 4

FIG. 5

3/3

FIG. 6

FIG. 7